(19) Europäisches Patentamt / European Patent Office / Office européen des brevets

(11) **EP 4 276 490 A1**

(12) **EUROPEAN PATENT APPLICATION**
published in accordance with Art. 153(4) EPC

(43) Date of publication:
**15.11.2023 Bulletin 2023/46**

(21) Application number: **21924238.5**

(22) Date of filing: **09.10.2021**

(51) International Patent Classification (IPC):
**G01S 7/36** (2006.01)

(52) Cooperative Patent Classification (CPC):
**G01S 7/36; G01S 13/931**

(86) International application number:
**PCT/CN2021/122892**

(87) International publication number:
**WO 2022/166241 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.02.2021 CN 202110149985**

(71) Applicant: **Huawei Technologies Co., Ltd.
Shenzhen, Guangdong 518129 (CN)**

(72) Inventors:
• **SONG, Sida
Shenzhen, Guangdong 518129 (CN)**
• **MA, Sha
Shenzhen, Guangdong 518129 (CN)**

(74) Representative: **Maiwald GmbH
Engineering
Elisenhof
Elisenstrasse 3
80335 München (DE)**

(54) **INTERFERENCE LISTENING METHOD AND DEVICE, AND RADAR**

(57) This application relates to radar technologies, and in particular, to an interference sensing method and apparatus, and a radar. An operating period of a radar to which the method is applied includes at least one detection-only period and at least one detection-and-sensing period. The detection-only period includes a plurality of transmission cycles, and the detection-and-sensing period includes at least one transmission cycle and at least one sensing cycle. The method includes: When the radar is in the transmission cycle, the radar generates and transmits a first detection signal, and receives an echo signal corresponding to the first detection signal, to perform target object detection. When the radar is in the sensing cycle, the radar generates but skips transmitting a second detection signal, and obtains an electromagnetic signal that can be detected by the radar in the sensing cycle, to perform interference sensing. Therefore, target detection and sensing are simultaneously performed in a same detection frame.

FIG. 7

EP 4 276 490 A1

## Description

This application claims priority to Chinese Patent Application No. 202110149985.4, filed with the China National Intellectual Property Administration on February 03, 2021 and entitled "INTERFERENCE SENSING METHOD AND APPARATUS, AND RADAR", which is incorporated herein by reference in its entirety.

## TECHNICAL FIELD

This application relates to radar technologies in the field of fusion sensing of autonomous driving or intelligent driving, and in particular, to an interference sensing method and apparatus, and a radar.

## BACKGROUND

With development of autonomous vehicle driving technologies, users have more requirements for intellectualization of a vehicle. A radar plays an important role in implementing functions, such as assisted driving and autonomous driving, of an intelligent vehicle. A plurality of types of radars may be mounted in the vehicle, such as a millimeter wave radar, a laser radar, and an ultrasonic radar. A radar is capable of sensing surroundings, collecting data, identifying and tracking a moving object, and identifying stationary scenes, such as a lane line and a sign, at any time during a traveling process of the vehicle. This can detect a possible danger in advance, timely help a driver or even autonomously take a necessary avoidance measure, and effectively improve safety and comfort of driving the vehicle.

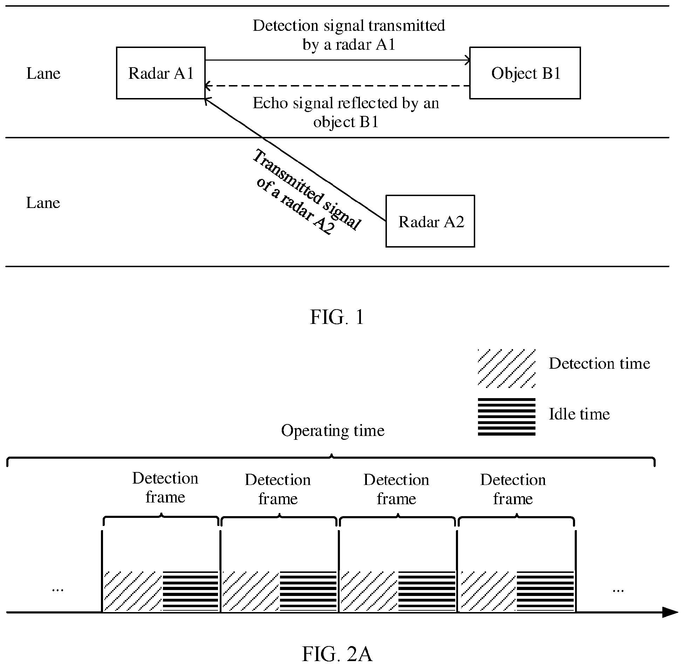

With increasing popularity of a vehicle-mounted radar, mutual interference between vehicle-mounted radars becomes more serious, which reduces detection efficiency of the radar and increases a false alarm probability of the radar. This causes non-negligible impact on safety or comfort of driving a vehicle. As shown in FIG. 1, a radar A1 may transmit a detection signal, the detection signal forms an echo signal after being reflected by an object B1, and the radar A1 receives the echo signal through a receiver. When a radar A2 exists in a field of view of the radar A1, the radar A1 may receive a transmitted signal of the radar A2 in a process of receiving the echo signal. The radar A1 performs a same signal processing operation on the received echo signal and the transmitted signal of the radar A2. As a result, the transmitted signal of the radar A2 interferes with processing of the echo signal by the radar A1, which may cause a false alarm or missing detection. The false alarm may cause an autonomous vehicle (or an intelligent assisted vehicle) to slow down or brake sharply if there is no object ahead, reducing comfort of driving. Missing detection may cause the autonomous vehicle (or the intelligent assisted vehicle) to mistakenly determine that there is no object when there is actually an object, and then the autonomous vehicle (or the intelligent assisted vehicle) does not slow down or brake, resulting in a traffic accident and thus reducing driving safety of the vehicle.

Therefore, how to sense an interference signal to avoid or eliminate interference of the interference signal helps improve driving safety and comfort of the vehicle.

## SUMMARY

Embodiments of this application provide an interference sensing method and apparatus, and a radar, to perform sensing in detection time of a detection frame. This improves comprehensiveness of sensing.

According to a first aspect, an embodiment of this application provides an interference sensing method, applied to a radar. An operating period of the radar includes at least one detection-only period and at least one detection-and-sensing period. The detection-only period includes a plurality of transmission cycles, and the detection-and-sensing period includes at least one transmission cycle and at least one sensing cycle. The method includes: When the radar is in the transmission cycle, the radar generates and transmits a first detection signal, and receives an echo signal corresponding to the first detection signal, to perform target object detection. When the radar is in the sensing cycle, the radar generates but skips transmitting a second detection signal, and obtains an electromagnetic signal that can be detected by the radar in the sensing cycle, to perform interference sensing.

It may be understood that the radar usually transmits the detection signal in a form of a detection frame. If a signal transmitted by another radar is sensed in the detection time of the detection frame, there is a high probability that the another radar will still transmit a signal in a next detection frame, which may continue to interfere with this radar. Therefore, in this embodiment of this application, the radar may simultaneously perform target object detection and interference sensing in detection time of a same detection frame (namely, the detection-and-sensing period). In this way, a target detection capability is not lost if an entire detection frame is used for silent sensing, and a signal that actually interferes with target detection of the radar is sensed.

In some embodiments, the radar includes a first antenna and a second antenna. The first detection signal corresponds to the first antenna, and the second detection signal corresponds to the second antenna. That the radar generates and transmits a first detection signal when the radar is in the transmission cycle includes: When the radar is in the at least one transmission cycle, the radar generates the first detection signal and transmits the first detection signal through the first antenna. That the radar generates but skips transmitting a second detection signal when the radar is in the sensing cycle includes: When the radar is in the at least one sensing cycle, the radar generates the second detection signal but skips transmitting the second detection signal through the second antenna.

In other words, in this implementation, the radar may use different antennas to perform detection and sensing separately, which implements simultaneous detection and sensing, and facilitates control of the radar.

In some embodiments, the radar includes a first antenna and a second antenna. The at least one transmission cycle includes a transmission cycle corresponding to the first antenna and a transmission cycle corresponding to the second antenna. The at least one sensing cycle includes a sensing cycle corresponding to the first antenna and a sensing cycle corresponding to the second antenna. That the radar generates and transmits a first detection signal when the radar is in the transmission cycle includes: When the radar is in the transmission cycle corresponding to the first antenna, the radar generates a first detection signal corresponding to the first antenna and transmits the first detection signal corresponding to the first antenna through the first antenna. When the radar is in the transmission cycle corresponding to the second antenna, the radar generates a first detection signal corresponding to the second antenna and transmits the first detection signal corresponding to the second antenna through the second antenna. That the radar generates but skips transmitting a second detection signal when the radar is in the sensing cycle includes: When the radar is in the sensing cycle corresponding to the first antenna, the radar generates a second detection signal corresponding to the first antenna but skips transmitting the second detection signal corresponding to the first antenna through the first antenna. When the radar is in the sensing cycle corresponding to the second antenna, the radar generates a second detection signal corresponding to the second antenna but skips transmitting the second detection signal corresponding to the second antenna through the second antenna.

In other words, in this implementation, one antenna of the radar may be configured for detection and sensing separately at different time points. In this way, detection and sensing are simultaneously performed, and a detection capability or a sensing capability is not lost due to a fault of some antennas of the radar.

In a possible implementation, a transmission cycle of the at least one transmission cycle and a sensing cycle of the at least one sensing cycle are arranged in an alternating manner. Alternatively, a transmission cycle of the at least one transmission cycle and a sensing cycle of the at least one sensing cycle are randomly arranged. Alternatively, there are N sensing cycles between two adjacent transmission cycles of the at least one transmission cycle. The N sensing cycles are a subset of the at least one sensing cycle, and N is an integer greater than 1. Alternatively, there are M transmission cycles between two adjacent sensing cycles of the at least one sensing cycle. The M transmission cycles are a subset of the at least one transmission cycle, and M is an integer greater than 1.

In other words, in this implementation, the transmission cycle and the sensing cycle may be flexibly configured to adapt to different scenarios or requirements.

In a possible implementation, the method further includes: determining interference information of the radar based on the second detection signal and the electromagnetic signal.

In this implementation, an interference signal may be determined by a local oscillator signal of a sensing cycle in detection time of a detection frame and an electromagnetic signal detected in the sensing cycle, so that a signal that actually interferes with target detection of the radar can be sensed.

In a possible implementation, the electromagnetic signal includes a plurality of signals. The determining interference information of the radar based on the second detection signal and the electromagnetic signal includes: performing frequency mixing on the plurality of signals separately with the second detection signal, to obtain a plurality of intermediate frequency signals; determining that signal strength of a first signal in the plurality of intermediate frequency signals is greater than a preset threshold; determining, in the plurality of signals, that a signal corresponding to the first signal is an interference signal; and determining that frequency domain information and/or time domain information of the interference signal are/is the interference information.

In this implementation, a signal that is with high signal strength and detected in a sensing cycle may be determined as the interference signal, so that the radar avoids or eliminates unnecessary interference.

In a possible implementation, the transmission cycle means a cycle in which the radar transmits a radar signal with a full waveform.

According to a second aspect, an embodiment of this application provides an interference sensing apparatus. An operating period of the apparatus includes at least one detection-only period and at least one detection-and-sensing period. The detection-only period includes a plurality of transmission cycles, and the detection-and-sensing period includes at least one transmission cycle and at least one sensing cycle. The apparatus includes the following units. A detecting unit is configured to: when the apparatus is in the transmission cycle, generate and transmit a first detection signal, and receive an echo signal corresponding to the first detection signal, to perform target object detection. A sensing unit is configured to: when the apparatus is in the sensing cycle, generate but not transmit a second detection signal, and obtain an electromagnetic signal that can be detected by the apparatus in the sensing cycle, to perform interference sensing.

In a possible implementation, the apparatus further includes a first antenna and a second antenna, the first detection signal corresponds to the first antenna, and the second detection signal corresponds to the second antenna. The detecting unit is configured to: when the apparatus is in the at least one transmission cycle, generate the first detection signal and transmit the first detection signal through the first antenna. The sensing unit is configured to: when the apparatus is in the at least one sensing cycle, generate the second detection signal but not transmit the second detection signal through the second antenna.

In a possible implementation, the apparatus further includes a first antenna and a second antenna. The at least one transmission cycle includes a transmission cycle corresponding to the first antenna and a transmission cycle corresponding to the second antenna. The at least one sensing cycle includes a sensing cycle corresponding to the first antenna and a sensing cycle corresponding to the second antenna. The detecting unit is configured to: when the apparatus is in the transmission cycle corresponding to the first antenna, generate a first detection signal corresponding to the first antenna and transmit the first detection signal corresponding to the first antenna through the first antenna; or when the apparatus is in the transmission cycle corresponding to the second antenna, generate a first detection signal corresponding to the second antenna and transmit the first detection signal corresponding to the second antenna through the second antenna. The sensing unit is configured to: when the apparatus is in the sensing cycle corresponding to the first antenna, generate a second detection signal corresponding to the first antenna but not transmit the second detection signal corresponding to the first antenna through the first antenna; or when the apparatus is in the sensing cycle corresponding to the second antenna, generate a second detection signal corresponding to the second antenna but not transmit the second detection signal corresponding to the second antenna through the second antenna.

In a possible implementation, a transmission cycle of the at least one transmission cycle and a sensing cycle of the at least one sensing cycle are arranged in an alternating manner. Alternatively, a transmission cycle of the at least one transmission cycle and a sensing cycle of the at least one sensing cycle are randomly arranged. Alternatively, there are N sensing cycles between two adjacent transmission cycles of the at least one transmission cycle. The N sensing cycles are a subset of the at least one sensing cycle, and N is an integer greater than 1. Alternatively, there are M transmission cycles between two adjacent sensing cycles of the at least one sensing cycle. The M transmission cycles are a subset of the at least one transmission cycle, and M is an integer greater than 1.

In a possible implementation, the apparatus further includes: a determining unit, configured to determine interference information of the apparatus based on the second detection signal and the electromagnetic signal.

In a possible implementation, the electromagnetic signal includes a plurality of signals. The determining unit is configured to: perform frequency mixing on different signals in the plurality of signals separately with the second detection signal, to obtain a plurality of intermediate frequency signals; determine that signal strength of a first signal in the plurality of intermediate frequency signals is greater than a preset threshold; determine, in the plurality of signals, that a signal corresponding to the first signal is an interference signal; and determine that frequency domain information and/or time domain information of the interference signal are/is the interference information.

In a possible implementation, the transmission cycle means a cycle in which the apparatus transmits a radar signal with a full waveform.

It may be understood that the apparatus provided in the second aspect is configured to implement the method provided in the first aspect. For beneficial effects of the apparatus, refer to the foregoing description of beneficial effects of the method provided in the first aspect, and details are not described herein again.

According to a third aspect, an embodiment of this application provides a radar, including a processor, a memory, a signal transmitting module, and a signal receiving module. The memory is configured to store a computer program. The processor is configured to execute the computer program to implement the method according to the first aspect.

According to a fourth aspect, an embodiment of this application provides a computer storage medium. The computer storage medium stores a computer program, and when the computer program is executed by a processor, the method according to the first aspect is implemented.

According to a fifth aspect, an embodiment of this application provides a computer program, including a program for implementing the method according to the first aspect.

According to a sixth aspect, an embodiment of this application provides a chip system. The chip system includes: a memory and a processor. The memory is configured to store a computer program. The processor is configured to execute the computer program to implement the method according to the first aspect.

The solutions provided in embodiments of this application may simultaneously implement target object detection and interference sensing in the detection time of the same detection frame. In addition, interference sensing is performed in the detection time of the detection frame, and the sensed interference signal is usually the signal that actually interferes with target detection of the radar. Therefore, this improves comprehensiveness of interference sensing. The sensing result is complete, or the signal that actually interferes with target detection may be sensed even if interference sensing is performed only in idle time of the detection frame. The target detection capability is not lost if the entire detection frame is used for silent sensing.

**BRIEF DESCRIPTION OF DRAWINGS**

FIG. 1 is a schematic diagram of mutual interference between vehicle-mounted radars;
FIG. 2A is a schematic diagram of operating time of a radar;
FIG. 2B is a schematic diagram of detection time in a detection frame;
FIG. 3 is a schematic diagram of an interference sensing solution;
FIG. 4 is a schematic diagram of an interference sensing solution according to an embodiment of this application;
FIG. 5 is a schematic diagram of a possible application scenario according to an embodiment of this application;
FIG. 6 is a schematic diagram of a structure of a radar according to an embodiment of this application;
FIG. 7 is a schematic diagram of an interference sensing solution according to an embodiment of this application;
FIG. 8 is a schematic diagram of an interference sensing solution according to an embodiment of this application;
FIG. 9 is a schematic diagram of an interference sensing solution according to an embodiment of this application;
FIG. 10 is a schematic diagram of a signal generated by a frequency-modulated continuous-wave radar according to an embodiment of this application;
FIG. 11 is a schematic diagram of a relationship among a detection signal, an echo signal, and an intermediate frequency sampling signal according to an embodiment of this application;
FIG. 12 is a schematic diagram of a structure of an interference sensing apparatus according to an embodiment of this application; and
FIG. 13 is a schematic block diagram of a radar according to an embodiment of this application.

**DESCRIPTION OF EMBODIMENTS**

The following describes technical solutions in embodiments of the present invention with reference to the accompanying drawings. It is clear that the described embodiments are only some rather than all of embodiments of this specification.

In the descriptions of this specification, "an embodiment", "some embodiments", or the like indicates that one or more embodiments of this specification include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of" means two or more than two.

In the descriptions of this specification, the terms "first" and "second" are only intended for description, and shall not be understood as an indication or implication of relative importance or an implicit indication of a quantity of indicated technical features. Therefore, a feature limited by "first" or "second" may explicitly or implicitly include one or more features. The terms "include", "comprise", and "have", and variants thereof all mean "include but are not limited to", unless otherwise specifically emphasized in another manner.

A radar (radar) is a detection apparatus commonly used in fields such as intelligent transportation, autonomous driving, atmospheric environment sensing, geographic surveying and mapping, and uncrewed aerial vehicles. The radar may also be referred to as a detection apparatus, a detector, or a radio signal sending apparatus, and has one or more capabilities of target detection, distance measurement, velocity measurement, target tracking, imaging identification, and the like.

The radar may transmit an electromagnetic signal (or an electromagnetic wave). The electromagnetic signal transmitted by the radar may be referred to as a detection signal or a radar signal. Specifically, refer to a transmission pattern (pattern) during operation of a radar as shown in FIG. 2A. When the radar is in an operating state, the radar may transmit a radar signal in a form of a detection frame. The detection frame is a long time period, for example, a time period with a time length of 100 milliseconds. In other words, operating time of the radar may include one or more detection frames in which the radar signal is transmitted. The operating time of the radar may also be referred to as an operating period of the radar. The operating time means time when the radar is in the operating state, in other words, during the operating time of the radar, the radar is in the operating state. Still refer to FIG. 2A. One detection frame may be divided into detection time and idle time. In the idle time, the radar does not transmit a radar signal. In the detection time, the radar transmits the radar signal.

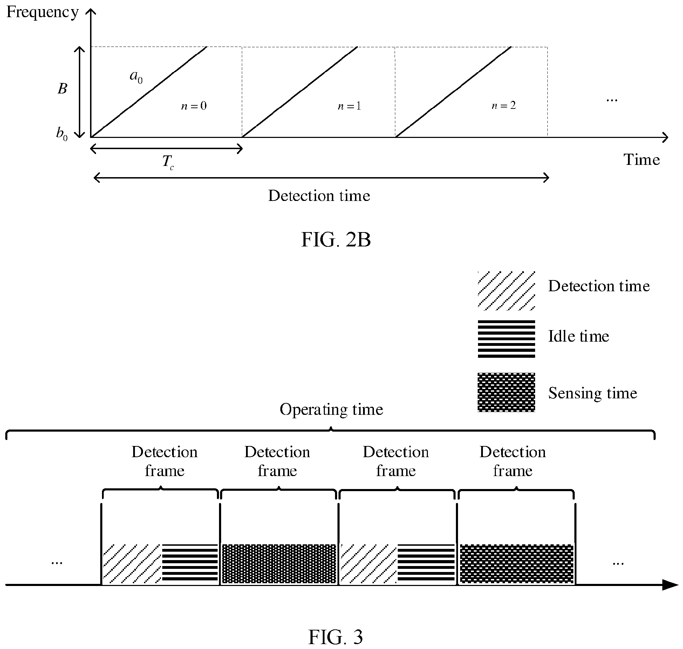

The detection time may be further divided into multiple transmission cycles. FIG. 2B shows an example of detection time. The detection time may be detection time of a frequency-modulated continuous-wave (frequency-modulated continuous-wave, FMCW) radar. Tc represents a transmission cycle, B represents a bandwidth of a radar signal, $b_0$ represents a start frequency of a radar signal, and $a_0$ is a slope. A transmission cycle may be referred to as a sweeping cycle, sweeping time or sweeping duration. The transmission cycle means a cycle in which a radar transmits one radar signal with a full waveform. In other words, in one transmission cycle, the radar transmits and only transmits one radar signal with a full waveform. In addition, in one transmission cycle, the radar may complete reception of an echo signal corresponding to the radar signal that is transmitted by the radar in the transmission cycle. It may be understood that the radar signal has a maximum detection distance. Even if there is a target object at the maximum detection distance, an echo signal that is formed by reflecting the radar signal by the target object may also be transmitted to the radar in the transmission cycle in which the radar signal is. Specifically, duration of one transmission cycle is usually 10 microseconds. Required duration in which the radar transmits the radar signal with a full waveform and completes reception of the echo signal is several (less than 10) microseconds.

In a solution, refer to a transmission pattern during operation of a radar as shown in FIG. 3. To sense an interference signal, the radar performs silent sensing in one of two adjacent detection frames, that is, in the detection frame, the radar does not transmit a radar signal, but only receives an electromagnetic wave that can be detected, to sense the interference signal. A radar signal is normally transmitted in the other of the two adjacent detection frames, to perform target object detection. In this solution, although the interference signal in one detection frame can be sensed, the radar also loses a target detection capability when performing silent sensing. In particular, duration of one detection frame is long (100 ms), and the radar cannot perform target detection in a long time period. As a result, continuity of target detection of the radar is poor, affecting comfort or safety of driving.

An embodiment of this application provides a radar. The radar may simultaneously perform detection and sensing in one of two adjacent detection frames. The radar may perform normal detection in the other of the two adjacent detection frames. For ease of description, the detection frame in which detection and sensing are simultaneously performed may be referred to as a detection-and-sensing period, and the detection frame in which normal detection is performed may be referred to as a detection-only period.

In detection time of the detection-and-sensing period provided by this embodiment of this application, at least one transmission cycle and at least one sensing cycle may be set. In other words, compared with detection time of the detection-only period or detection time of a normal detection frame, in the detection time of the detection-and-sensing period, not only the transmission cycle is set, but the at least one sensing cycle is set. In the transmission cycle, the radar may transmit a radar signal and receive an echo signal corresponding to the radar signal, to perform target detection. In the sensing cycle, the radar may generate a radar signal, but does not transmit the radar signal. The radar may obtain an electromagnetic signal that can be detected or received by the radar in the sensing cycle, to perform interference sensing. Therefore, detection and sensing may be performed in a same detection frame, so that the radar can sense an interference signal and perform target object detection in the detection frame, improving continuity of target detection of the radar.

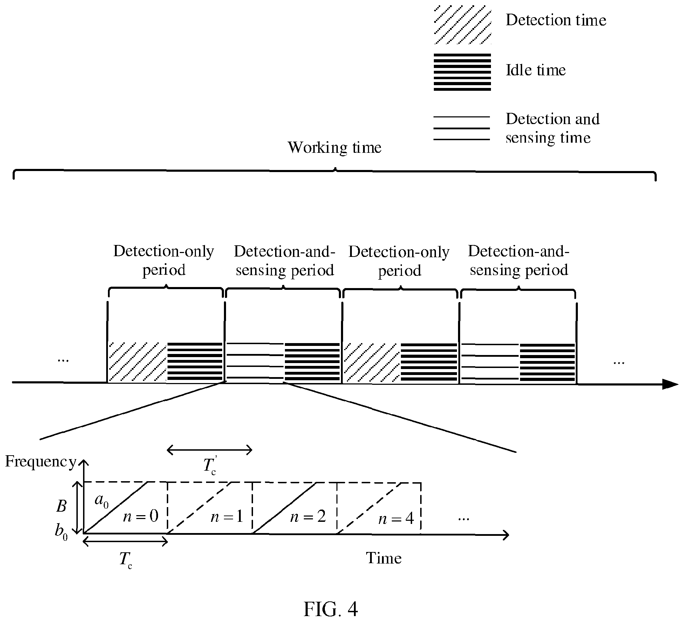

FIG. 4 shows an example of a transmission pattern during operation of a radar. In this example, a detection-only period and a detection-and-sensing period may be arranged in an alternating manner. In this embodiment of this application, for the detection-only period, refer to the foregoing description of the embodiment shown in FIG. 2B. Details are not described herein again. One detection-and-sensing period may include at least one transmission cycle and at least one sensing cycle. $T_c$ represents a transmission cycle. For details, refer to the foregoing description. Details are not described herein again. T represents a sensing cycle. The sensing cycle may also be referred to as sensing duration or a sensing period. When the radar is in the sensing cycle, an oscillator of the radar may generate a radar signal, but does not transmit the radar signal through an antenna. Time lengths of $T_c$ and $T_c^{'}$ may be the same, or time lengths of $T_c$ and $T_c^{'}$ may be different.

In some embodiments, as shown in FIG. 4, a transmission cycle and a sensing cycle in the detection-and-sensing period may be arranged in an alternating manner. To be specific, there is one sensing cycle between two adjacent transmission cycles, or there is one transmission cycle between two adjacent sensing cycles.

In some embodiments, a transmission cycle and a sensing cycle in the detection-and-sensing period may be arranged in a non-alternating manner. For example, there are two or more sensing cycles between two adjacent transmission cycles. For another example, there may be two or more transmission cycles between two adjacent sensing cycles. More examples may be given. During specific implementation, a developer may set a quantity of transmitting cycles and a quantity of sensing cycles in the detection-and-sensing period, as well as an ordering relationship of the transmitting cycles and the sensing cycles.

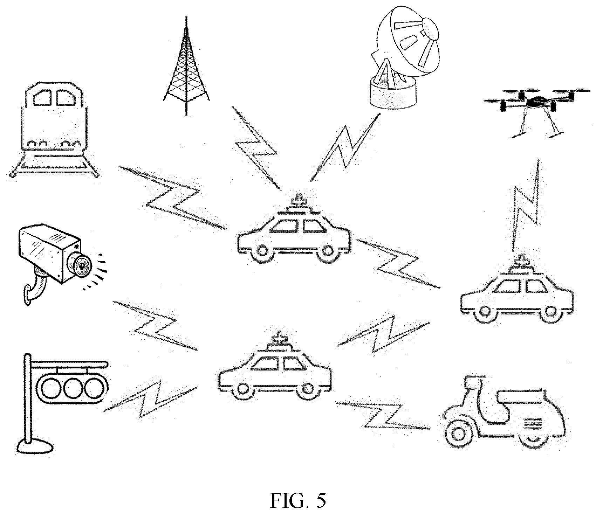

Refer to FIG. 5. A radar provided in an embodiment of this application may be applied to self driving, autonomous driving, intelligent driving, connected driving, and the like. A detection apparatus may be mounted in a motor vehicle (like an unmanned vehicle, an intelligent vehicle, an electric vehicle, and a digital vehicle), an uncrewed aerial vehicle, a rail vehicle, a bicycle, a signal light, a velocity measurement apparatus, a network device (like a base station and a terminal device in various systems), and the like. This application is applicable to a detection apparatus between vehicles, or a detection apparatus between a vehicle and another apparatus like an uncrewed aerial vehicle, or a detection apparatus between other apparatuses. A presented form, a mounting position and a function of the radar are not limited in this application.

The radar provided in this embodiment of this application may be a radar (radar) (based on a radio wave) like a millimeter wave radar or a lidar (lidar). In some embodiments, the radar may be a frequency-modulated continuous-wave (frequency-modulated continuous-wave, FMCW) radar, a frequency-modulated continuous-wave lidar (FMCW lidar), a pulse radar (pulse radar), a pulse lidar (pulse lidar), and the like.

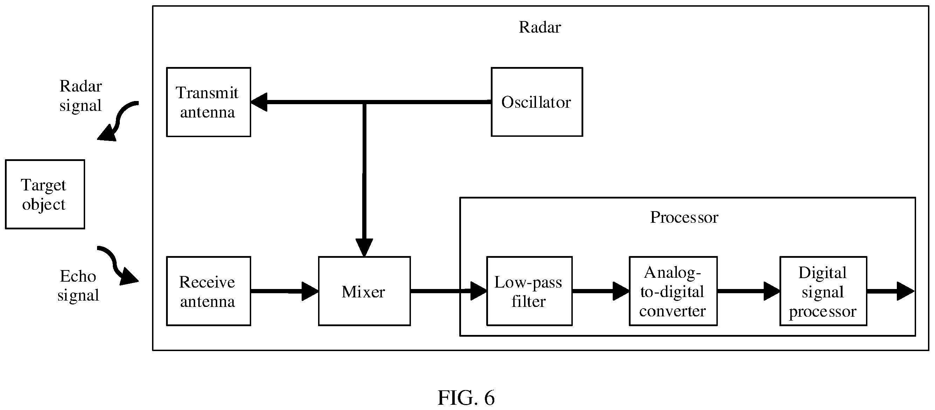

FIG. 6 shows a schematic diagram of a structure of a radar. The radar includes an oscillator (oscillator, LO), a transmit antenna (TX), a receive antenna (RX), a mixer (mixer), and a processor. For example, the processor may include a low pass filter (low pass filter, LPF), an analog-to-digital converter (analog-to-digital converter, ADC), a digital signal processor (digital signal processor, DSP), and the like.

In some embodiments, the radar may be a multiple input multiple output (multiple input multiple output, MIMO) radar with at least two transmit antennas. In an example, the at least two transmit antennas may each correspond to one oscillator. In other words, a quantity of transmit antennas and a quantity of oscillators of the radar may be the same, and the transmit antenna is in a one-to-one correspondence with the oscillator. Each transmit antenna may be configured to transmit a radar signal that is generated by the oscillator corresponding to the transmit antenna. In another example, two or more of the at least two transmit antennas may correspond to a same oscillator. The two or more transmit antennas may transmit a radar signal generated by the oscillator.

For example, the MIMO radar may be specifically a time-division MIMO radar. Frequency or frequency domain information of radar signals that are transmitted by different antennas of the time-division MIMO radar may be the same. Time or time domain information of radar signals that are transmitted by different transmit antennas of the time-division MIMO radar may be different.

For example, the MIMO radar may be specifically a frequency-division MIMO radar. Frequencies of radar signals that are transmitted by different antennas of the frequency-division MIMO radar may be different. Time of radar signals that are transmitted by different transmit antennas of the frequency-division MIMO radar may be the same.

In some embodiments, a transmission cycle in a detection-and-sensing period may correspond to at least one transmit antenna of at least two transmit antennas of the radar. A sensing cycle in the detection-and-sensing period may correspond to one or more transmit antennas of the at least two transmit antennas. In other words, in the detection-and-sensing period, the at least one transmit antenna is enabled to transmit a radar signal that can be generated by an oscillator corresponding to the at least one transmit antenna. In the detection-and-sensing period, the one or more transmit antennas are disabled. An oscillator corresponding to the one or more transmit antennas still generates a radar signal, but the generated radar signal is not transmitted through the antenna.

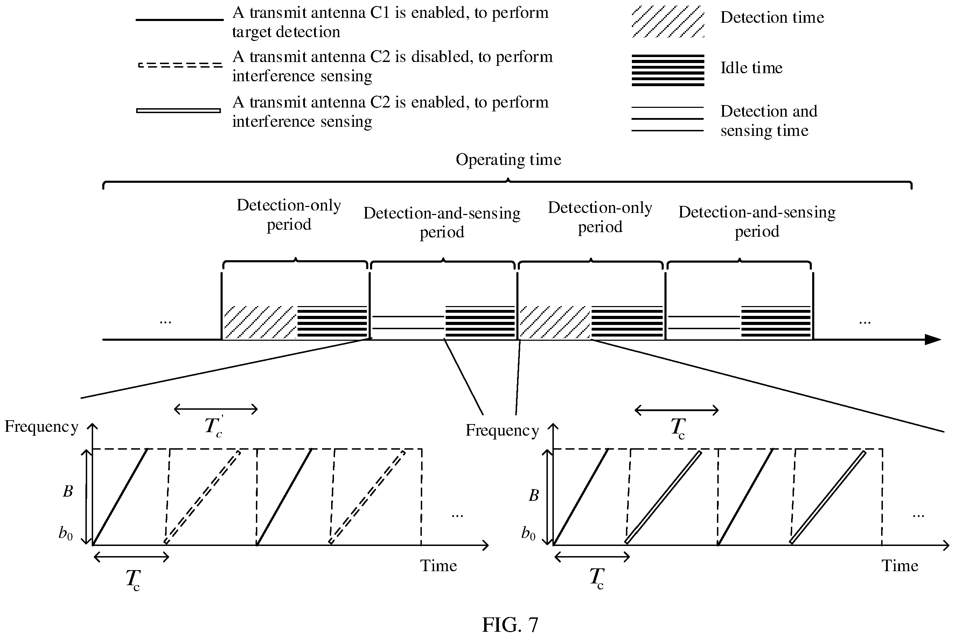

FIG. 7 shows an example of a transmission pattern. The transmission pattern may be applied to a time-division MIMO radar with at least a transmit antenna C1 and a transmit antenna C2. A transmission cycle in a detection-and-sensing period may correspond to the transmit antenna C1, and a sensing cycle in the period may correspond to the transmit antenna C2. In other words, when the radar is in the transmission cycle in the detection-and-sensing period, the radar may generate a radar signal C11 corresponding to the transmit antenna C1, and the transmit antenna C1 in an operating state may transmit the radar signal, to perform target detection. When the radar is in the sensing cycle in the detection-and-sensing period, the radar may generate a radar signal C21 corresponding to the transmit antenna C2, but the transmit antenna C2 is disabled. Therefore, the transmit antenna C2 does not transmit the radar signal C21. For example, as shown in FIG. 7, a frequency band of the radar signal C11 and a frequency band of the radar signal C21 may be the same, for example, a frequency band $B$ shown in FIG. 7. Therefore, the radar may perform target detection by using the frequency band $B$ to perform, and sense whether interference exists on the frequency band $B$.

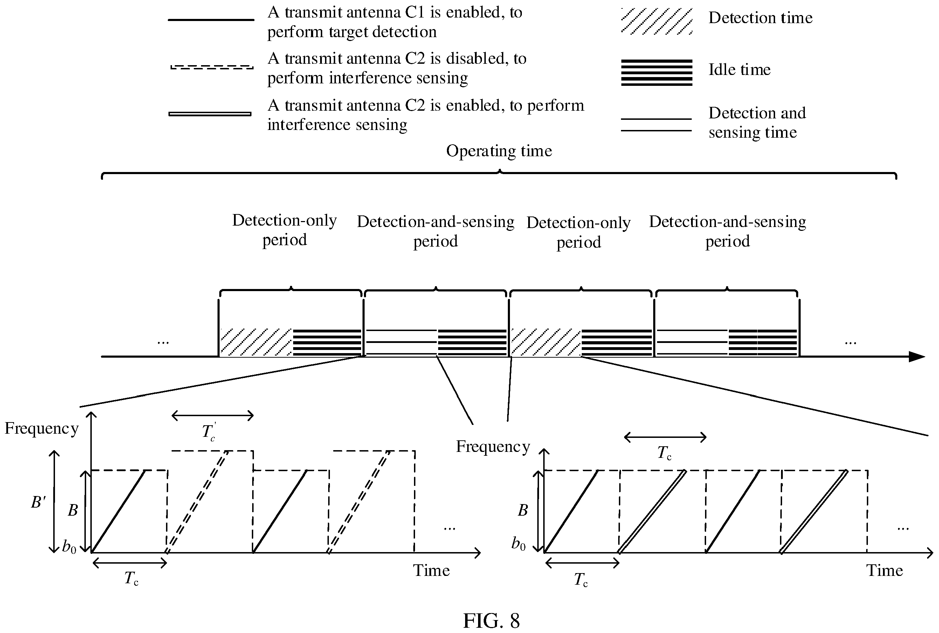

FIG. 8 shows another example of a transmission pattern. In this example, a radar may change or set a sensed frequency band. In other words, the sensed frequency band may be different from a frequency band for detection. The transmission pattern may be applied to a time-division MIMO radar with at least a transmit antenna C1 and a transmit antenna C2. A transmission cycle in a detection-and-sensing period corresponds to the transmit antenna C1, and a sensing cycle in the detection-and-sensing period corresponds to the transmit antenna C2. In this example, the radar may generate a radar signal C11 corresponding to the transmit antenna C1, and the transmit antenna C1 in an operating state may transmit the radar signal C11, to perform target detection. When the radar is in the sensing cycle in the detection-and-sensing period, the transmit antenna C1 of the radar may generate a radar signal C21 corresponding to the transmit antenna C2, but the transmit antenna C2 is disabled. Therefore, the transmit antenna C2 does not transmit the radar signal C21. As shown in FIG. 8, a frequency band $B'$ of the radar signal C21 may be different from a frequency band $B$ of the radar signal C11. For example, the frequency band $B'$ may be greater than and include the frequency band *B*. For another example, the frequency band *B'* may overlap or partially overlap with the frequency band *B*. The frequency band *B'* may not overlap or not partially overlap with the frequency band *B*. In other words, a frequency band sensed by the radar may not be limited by a current frequency band for the radar to detect a target. The radar may adjust a frequency band sensed by the radar based on a frequency band that the radar focuses on, or adjust a bandwidth sensed by the radar, so that the sensed frequency band can cover the frequency band that the radar focuses on. For example, when the radar is to change a frequency band for detection, for example, the radar is to use a frequency band $B_1$ to detect a target in an immediate next detection-only period. The radar may sense in advance whether interference exists on the frequency band $B_1$. Therefore, the radar may adjust the sensed frequency band *B'*, so that the sensed frequency band *B'* can cover the frequency band $B_1$. Therefore, the radar may sense in advance whether interference exists on the frequency band $B_1$, so that the radar can avoid or eliminate interference prior to arrival of a next detection-only period, or the radar can avoid or eliminate interference at the beginning of a next detection-only period.

In some embodiments, one detection-and-sensing period includes a plurality of transmission cycles. At least one transmission cycle of the plurality of transmission cycles corresponds to at least one transmit antenna of at least two transmit antennas of the radar. One or more transmission cycles of the plurality of transmission cycles correspond to one or more transmit antennas of the at least two transmit antennas. In other words, when the radar is in the at least one transmission cycle, the at least one transmit antenna may transmit a radar signal. When the radar is in the one or more transmission cycles, the one or more transmit antennas may transmit a radar signal. The at least one transmission cycle does not overlap with the one or more transmission cycles, and the at least one transmit antenna does not overlap with the one or more transmit antennas.

In some embodiments, one detection-and-sensing period includes a plurality of sensing cycles. At least one sensing cycle of the plurality of sensing cycles corresponds to at least one transmit antenna of at least two transmit antennas of the radar. One or more sensing cycles of the plurality of sensing cycles correspond to one or more transmit antennas of the at least two transmit antennas. In other words, when the radar is in the at least one sensing cycle, an oscillator may generate a radar signal corresponding to the at least one transmit antenna, but the at least one transmit antenna does not transmit the radar signal. When the radar is in the one or more sensing cycles, the oscillator may generate radar signals corresponding to the one or more transmit antennas, but the one or more transmit antennas do not transmit the radar signals. The at least one sensing cycle does not overlap with the one or more sensing cycles, and the at least one transmit antenna does not overlap with the one or more transmit antennas.

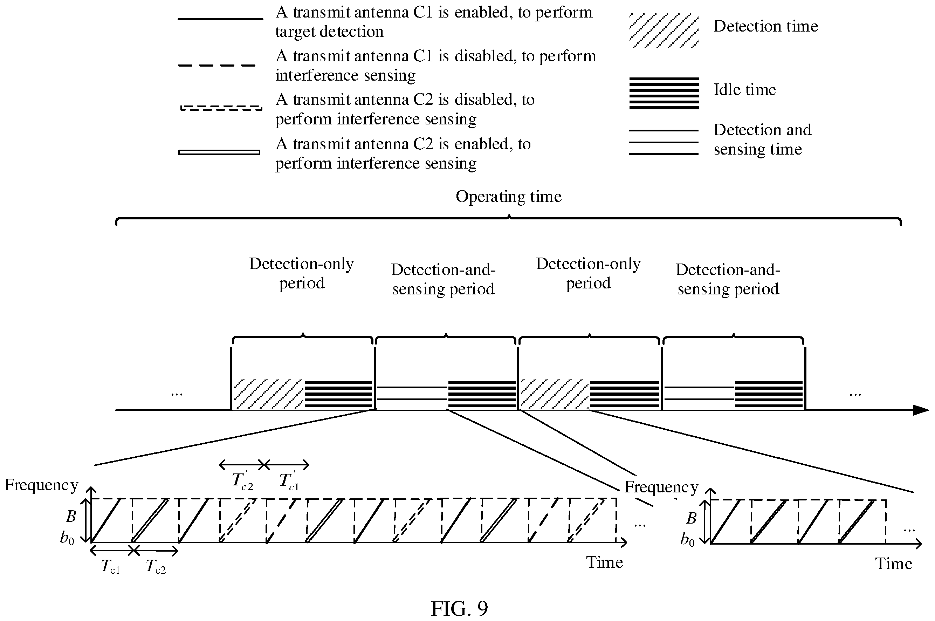

FIG. 9 shows an example of a transmission pattern. The transmission pattern may be applied to a time-division MIMO radar with at least a transmit antenna C1 and a transmit antenna C2. In the transmission pattern, a transmission cycle in one detection-and-sensing period may include a transmission cycle $T_{c1}$ of the transmit antenna C1 or a transmission cycle $T_{c2}$ of the transmit antenna C2. In an example, in the detection-and-sensing period, a quantity of transmission cycles $T_{c1}$ may be equal to a quantity of transmission cycles $T_{c2}$. In another example, in the detection-and-sensing period, a quantity of transmission cycles $T_{c1}$ may not be equal to a quantity of transmission cycles $T_{c2}$. In an example, one transmission cycle $T_{c1}$ may follow one transmission cycle $T_{c2}$. To be specific, one transmission cycle $T_{c1}$ may be closely adjacent to one transmission cycle $T_{c2}$, with no sensing cycle therebetween. In another example, there may be one or more sensing cycles between one transmission cycle $T_{c1}$ and one transmission cycle $T_{c2}$.

In the transmission pattern, a transmission cycle in one detection-and-sensing period may include a sensing cycle $T_{c1}'$ of the transmit antenna C 1 or a sensing cycle $T_{c2}'$ of the transmit antenna C2. In an example, in one detection-and-sensing period, a quantity of sensing cycles $T_{c1}'$ may be equal to a quantity of sensing cycles $T_{c2}'$. In another example, in one detection-and-sensing period, a quantity of sensing cycles $T_{c1}'$ may not be equal to a quantity of sensing cycles $T_{c2}'$. In an example, one sensing cycle $T_{c1}'$ may follow one sensing cycle $T_{c2}'$. To be specific, one sensing cycle $T_{c1}'$ may be closely adjacent to one sensing cycle $T_{c2}'$, with no transmission cycle therebetween. In another example, there may be one or more transmission cycles between one sensing cycle $T_{c1}'$ and one sensing cycle $T_{c2}'$.

When the radar is in the transmission cycle $T_{c1}$, the transmit antenna C1 is in an operating state. The radar may generate a radar signal C11, and transmits the radar signal C11 through the transmit antenna C1, to perform target detection. When the radar is in the sensing cycle $T_{c1}'$, the transmit antenna C1 is disabled. The radar may generate a radar signal C11, but does not transmit the radar signal C11 through the transmit antenna C1, to perform interference sensing.

When the radar is in the transmission cycle $T_{c2}$, the transmit antenna C2 is in an operating state. The radar may generate a radar signal C21, and transmits the radar signal C21 through the transmit antenna C2, to perform target detection. When the radar is in the sensing cycle $T_{c2}^{'}$ , the transmit antenna C2 is disabled. The radar may generate a radar signal C21, but does not transmit the radar signal C21 through the transmit antenna C2, to perform interference sensing.

For example, a quantity of transmitting cycles and a quantity of sensing cycles in the detection-and-sensing period, as well as an ordering relationship of the transmitting cycles and the sensing cycles may be elaborately set. According to the solution described in the embodiment shown in FIG. 9, a cycle of the transmit antenna C2 is half of a detection-only period, which reduces a maximum velocity measurement range of the transmit antenna C2 by half. To be specific, there is velocity ambiguity generated in comparison with the detection-only period. The radar signal C11 transmitted by the transmit antenna C1 in one detection frame is no longer transmitted in one cycle. Received signals obtained when the transmit antenna C1 and the transmit antenna C2 transmit signals alternately in the detection-only period may be restored by performing data reconstruction on received signals of the radar signal C11 and the radar signal C21. This voids or solves a problem of ambiguity of a velocity measurement result. In an example, data reconstruction may be performed by using a compressed sensing technology. In another example, data reconstruction may be performed by using a nested array technology.

For example, a quantity of transmitting cycles and a quantity of sensing cycles in the detection-and-sensing period, as well as an ordering relationship of the transmitting cycles and the sensing cycles may be randomly selected or randomly set. In an example of this example, in the detection-and-sensing period, a total quantity of transmission cycles is not less than a total quantity of sensing cycles. In the detection-and-sensing period, when a total quantity of sensing cycles is not greater than a total quantity of transmission cycles, a simple Fourier transform may generate a side lobe during processing of an echo signal. In this case, a side lobe level may be controlled below noise by windowing, which does not affect a target detection result. In an example, windowing may be processing using a Hamming window (hamming window). In another example, windowing may be processing using a Chebyshev window (Chebyshev window).

In the embodiment shown in FIG. 9, in a detection frame of the detection-and-sensing period, the radar uses echo signals of two transmit antennas (the transmit antenna C1 and the transmit antenna C2) to perform target detection. Angular resolution is better than in the embodiment shown in FIG. 7 or FIG. 8.

In conclusion, the solution described in the embodiment shown in FIG. 9 has better target angular resolution and maintains higher performance of target distance and velocity measurement.

The foregoing describes application of the solution provided in this embodiment of this application to a time-division MIMO radar as an example. The solution provided in this embodiment of this application may also be applied to a frequency-division MIMO radar. The following describes an example.

It can be set that the frequency-division MIMO radar has at least the transmit antenna C1 and the transmit antenna C2. As described above, a frequency or frequency band of a radar signal corresponding to the transmit antenna C1 may be different from a frequency or frequency band of a radar signal corresponding to the transmit antenna C2. Time in which the transmit antenna C1 transmits the radar signal may be the same as time in which the transmit antenna C2 transmits the radar signal.

In some embodiments, a transmission pattern of the frequency-division MIMO radar may be set. In this case, a transmission cycle of the transmit antenna C1 and a sensing cycle of the transmit antenna C2 may be a same time period, and a sensing cycle of the transmit antenna C1 and a transmission cycle of the transmit antenna C2 may be a same time period. For specific meanings of the transmission cycle and the sensing cycle of the transmit antenna, refer to the foregoing descriptions. Details are not described herein again. Specifically, it can be set that one detection-and-sensing period includes N time periods, where M time periods may be used as both the transmission cycle of the transmit antenna C1 and the sensing cycle of the transmit antenna C2. In addition, K time periods may be used as both the sensing cycle of the transmission cycle C1 and the transmission cycle of the transmit antenna C2. A remaining time period (namely, N-M-K time periods) is used as both the transmission cycles of the transmit antenna C1 and the transmit antenna C2. N is an integer greater than 1. Both M and K are positive integers, and M+K≤N.

In an example of these embodiments, the time period used as the transmission cycle of the transmit antenna C1 and the time period used as the sensing cycle of the transmit antenna C1 may be arranged in an alternating manner or arranged in a non-alternating manner. Similarly, the time period used as the transmission cycle of the transmit antenna C2 and the time period used as the sensing cycle of the transmit antenna C2 may be arranged in an alternating manner or arranged in a non-alternating manner. For an implementation of arranging in a non-alternating manner, refer to the foregoing description. Details are not described herein again.

In some embodiments, a transmission pattern of the frequency-division MIMO radar may be set. In this case, a transmission cycle of the transmit antenna C1 and a transmission cycle of the transmit antenna C2 may be a same time period, and a sensing cycle of the transmit antenna C1 and a sensing cycle of the transmit antenna C2 may be a same time period. Specifically, it can be set that one detection-and-sensing period includes N time periods, where M time periods may be used as both the transmission cycle of the transmit antenna C1 and the transmission cycle of the transmit antenna C2. A remaining time period (namely, N-M time periods) is used as both the sensing cycles of the transmit antenna C1 and the transmit antenna C2. N is an integer greater than 1. M is a positive integer, and M≤N.

In an example of these embodiments, the time period used as the transmission cycle of the transmit antenna C1 and the time period used as the sensing cycle of the transmit antenna C1 may be arranged in an alternating manner or arranged in a non-alternating manner.

In some embodiments, the transmission cycle and the sensing cycle of the transmit antenna C1 in a detection-and-sensing period may be randomly arranged. Similarly, the transmission cycle and the sensing cycle of the transmit antenna C2 in the detection-and-sensing period may also be randomly arranged.

The foregoing describes the transmission cycle and the sensing cycle of the transmit antenna of the radar as an example. The following describes a solution in which the transmit antenna performs target detection in the transmission cycle as an example.

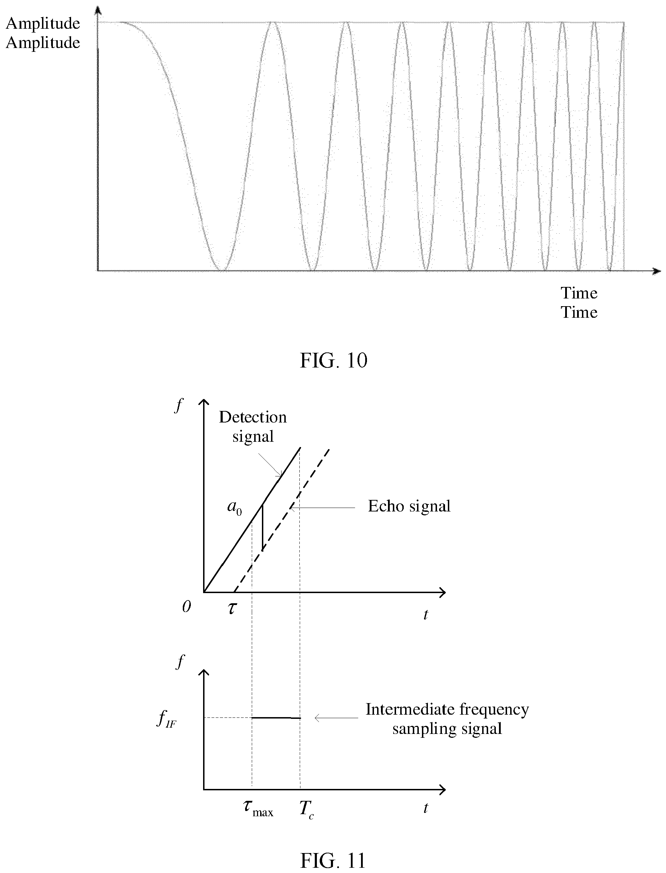

Some embodiments use an FMCW radar with the structure shown in FIG. 6 as an example. When the radar is in the transmission cycle of the transmit antenna, an oscillator corresponding to the transmit antenna generates a signal whose frequency varies linearly with time. The signal may be shown in FIG. 10. A part of the signal may be input into a mixer as a local oscillator signal, and another part may be transmitted through the transmit antenna. A receive antenna may receive an echo signal reflected back by a target or another electromagnetic wave in space. The echo signal or the electromagnetic wave is frequency-mixed with the local oscillator signal in the mixer. Then, an intermediate frequency sampling signal is obtained after processing of a low-pass filter and analog-to-digital conversion. The intermediate frequency sampling signal may be sent to a digital signal processor. The digital signal processor may process (usually perform fast Fourier transform, and then perform spectral analysis on) the intermediate frequency sampling signal to obtain information such as a distance, a velocity and an angle of a target object.

The following describes a specific process that a radar detects the target object.

For one transmit antenna, in one detection frame (a detection-and-sensing period or a detection-only period), an equivalent baseband signal of a frequency-modulated continuous-wave in an $n^{th}$ cycle (including a transmission cycle and a sensing cycle), which is output by an oscillator corresponding to the transmit antenna, is represented as:

$$S_{BB,n}^{Tx}(t) = A exp\left\{j2\pi\left[\frac{a_0}{2}(t - nT_c)^2 + \varphi_0\right]\right\}exp(j2\pi b_0 t) \quad (1)$$

$$nT_c \le t \le (n+1)T_c, n = 0,1,2,\dots,N-1$$

*A* is a signal amplitude. $a_0$ is a slope that a target sends a linear frequency-modulated signal. $b_0$ is a start frequency of a baseband signal. $\varphi_0$ is an initial phase. N is a quantity of cycles (including the transmission cycle and the sensing cycle) in which the frequency-modulated continuous-waves are continuously generated. A frequency is defined as a change rate of a phase relative to time. Therefore, a frequency of the baseband signal is:

$$f = \frac{d\left(\frac{a_0}{2}(t-nT_c)^2 + \varphi_0 + b_0 t\right)}{dt} = a_0(t - nT_c) + b_0 \quad (2)$$

$$nT_c \le t \le (n+1)T_c, n = 0,1,2,\dots,N-1$$

A diagram of the formula (2) may be shown in FIG. 2B.

The equivalent baseband signal of the frequency-modulated continuous-wave in the $n^{th}$ cycle radiates from the transmit antenna after up-conversion is performed on the signal, and is represented as:

$$S_{RF,n}^{Tx}(t) = S_{BB,n}^{Tx}(t)exp(j2\pi f_c t) = A exp\left\{j2\pi\left[\frac{a_0}{2}(t - nT_c)^2 + \varphi_0\right]\right\}exp[j2\pi(f_c +$$

$$b_0)t] \quad (3)$$

$$nT_c \le t \le (n+1)T_c, n = 0,1,2,\dots,N-1$$

$f_c$ is a carrier frequency. The signal is reflected back when meeting an obstacle. A reflected signal (namely, an echo signal) is a "copy" of a transmitted signal obtained after delay and amplitude attenuation. A received signal of the frequency-modulated continuous-wave in the $n^{th}$ cycle is represented as:

$$S_{RF,n}^{Rx}(t) = A' exp\left\{j2\pi\left[\frac{a_0}{2}(t - nT_c - \tau)^2 + \varphi_0\right]\right\} exp[j2\pi(f_c + b_0)(t - \tau)] \quad (4)$$

$$nT_c \le t \le (n + 1)T_c, n = 0,1,2, \dots, N - 1$$

$A'$ is a signal amplitude of the signal obtained after a transmit antenna gain, a reflection of a target, a propagation loss, and a receive antenna gain. $\tau$ is a total latency occurring when a radar signal is transmitted from a transmitter and reflected to a receiver by the target to receive a signal echo, and is represented as:

$$\tau = \tau_0 + \frac{2vt}{c} \quad (5)$$

$\tau_0$ is a radar echo latency caused by a reference distance. v is a radial relative velocity between the target and a radar, c is a velocity of light. The velocity v is far less than the velocity of light c, and a second term in the foregoing formula makes little contribution to subsequent detection of the baseband signal. Therefore, the second term in the formula (5) is ignored in the baseband signal. However, in a carrier frequency, the second term in the foregoing formula plays a key role in velocity detection, so the term is retained to obtain:

$$S_{RF,n}^{Rx}(t) \approx A' exp\left\{j2\pi\left[\frac{a_0}{2}(t - nT_c - \tau_0)^2 + \varphi_0\right]\right\} exp[j2\pi(f_c + b_0)(t - \tau)] \quad (6)$$

$$nT_c \le t \le (n + 1)T_c, n = 0,1,2, \dots, N - 1$$

The received signal and the transmitted signal are frequency-mixed by a mixer, and then processed by an intermediate frequency filter, to output an intermediate frequency (intermediate frequency, IF) signal. The intermediate frequency signal is represented as:

$$S_{IF,n}^{Rx}(t) = \frac{1}{AA'}S_{RF,n}^{Tx}(t) \times \left[S_{RF,n}^{Rx}(t)\right]^* \xRightarrow{u=t-nT_c} S_{IF,n}^{Rx}(t) = exp(j\Phi_n)exp[j2\pi(a_0\tau_0 + f_d^0)u] \quad (7)$$

$$\tau \le u \le T_c$$

$\Phi_n = 2\pi\left[(f_c + b_0)\tau_0 - \frac{a_0}{2}\tau_0^2 + f_d^0 nT_c\right]$ is phase information of the intermediate frequency signal.

$f_d^0 = (f_c + b_0)\frac{2v}{c}$ is a Doppler frequency formed by the radial relative velocity between the target and the detection radar.

A calculation result of the formula (7) is sampled, to obtain an intermediate frequency sampling signal. The intermediate frequency sampling signal is sent to a processor for Fourier transform, to obtain an intermediate frequency $f_{IF}$:

$$f_{IF} = a_0\tau_0 + f_d^0 \quad (8)$$

$$f_d^0 \ll a_0\tau_0. \text{ Therefore, } f_{IF} \approx a_0\tau_0.$$

FIG. 11 shows a relationship among a transmitted signal (a detection signal), a received signal (an echo signal), and an intermediate frequency sampling signal. A time interval for detection of the radar signal is $\tau_{max}$ to Tc, where $\tau_{max}$ is an echo latency corresponding to a maximum detection distance.

It can be learned from FIG. 11 that a frequency of an intermediate frequency sampling signal is a product of a slope of the transmitted signal and a latency $\tau$, that is,

$$f_{IF} \approx a_0\tau_0 = \frac{B}{T_c}\frac{2d}{c}.$$

Therefore, a distance d between the radar and the target object is:

$$d = \frac{cT_c}{2B}f_{IF} \quad (9)$$

For velocity detection, it can be seen from the formula (7) that a phase difference between echo intermediate frequency signals in two adjacent cycles at a same time sampling point is a fixed value, as following:

$$\Delta\Phi = \Phi_{n+1} - \Phi_n = 2\pi f_d^0 T_c \quad (10)$$

A Doppler frequency $f_d^0$ may be obtained by performing Fourier transform on phase sequences of the echo intermediate frequency signals in a plurality of consecutive cycles at a same time sampling point. A relationship between the Doppler frequency and a radial relative velocity v between the radar and the target object may be represented as:

$$f_d^0 = (f_c + b_0)\frac{2v}{c} = \frac{2v}{\lambda} \quad (11)$$

$\lambda$ is a wavelength of the radar signal.

Therefore, the radial relative velocity v between the radar and the target object is:

$$v = \frac{\lambda f_d^0}{2} \quad (12)$$

The foregoing deduction is performed on one target object. For a plurality of target objects, the foregoing deduction is also applicable. To be specific, received signals are frequency-mixed to obtain a plurality of intermediate frequency signals, and the intermediate frequency signals are sent to a processor for Fourier transform, to obtain intermediate frequencies corresponding to the plurality of target objects.

It can be seen from the foregoing deduction that a frequency difference (a frequency of the intermediate frequency signal) between the transmitted signal and the received signal has a linear relationship with the latency: A farther target object indicates later time of receiving a returned echo signal, and a larger frequency difference between the echo signal and an incident wave. A distance of an obstacle may be determined by determining the frequency of the intermediate frequency signal.

Based on the foregoing implementation, when the radar is in the transmission cycle of the detection-and-sensing period, the radar may detect the target object.

The following describes a solution in which the radar performs interference sensing in the sensing cycle as an example.

As described above, when the radar is in the sensing cycle of the transmit antenna, the oscillator corresponding to the transmit antenna still generates a signal. The signal or a part of the signal may be input into the mixer as a local oscillator signal. The transmit antenna is disabled, and does not transmit a signal. Therefore, in the sensing cycle, an electromagnetic signal that can be detected or received by the radar does not include an echo signal corresponding to a transmitted signal of the radar. For ease of description, the electromagnetic signal that can be detected or received by the radar in the sensing cycle is referred to as a non-echo signal.

The radar may obtain the non-echo signal, and determines interference information based on the non-echo signal.

In some embodiments, the radar may input the non-echo signal obtained by the radar into the mixer. The non-echo signal is frequency-mixed with the local oscillator signal in the mixer. Then, an intermediate frequency sampling signal is obtained after processing of a low-pass filter and analog-to-digital conversion. Then, it is determined whether signal strength of the intermediate frequency sampling signal is greater than a preset threshold. If the signal strength of the intermediate frequency sampling signal is greater than the preset threshold, it indicates that a non-echo signal corresponding to the intermediate frequency sampling signal interferes with target detection of the radar. Further, the non-echo signal corresponding to the intermediate frequency sampling signal may be determined as an interference signal.

For example, after the interference signal is determined, the radar may obtain frequency domain information of the interference signal, to perform an interference avoidance or interference elimination operation, like frequency hopping and waveform adjustment, based on the frequency domain information of the interference signal.

For example, after the interference signal is determined, the radar may obtain time domain information of the interference signal, to perform an interference avoidance or interference elimination operation, like time shifting, based on the time domain information of the interference signal.

For example, after the interference signal is determined, the radar may obtain the frequency domain information and the time domain information of the interference signal, to perform an interference avoidance or interference elimination operation, like frequency hopping, time shifting, and waveform adjustment, based on the frequency domain information and the time domain information of the interference signal.

In some embodiments, the radar may input the obtained non-echo signal into the mixer. The non-echo signal is frequency-mixed with the local oscillator signal in the mixer. Then, an intermediate frequency sampling signal is obtained after processing of a low-pass filter and analog-to-digital conversion. The intermediate frequency sampling signal may be sent to a digital signal processor. A digital signal processor may process the intermediate frequency sampling signal, to determine whether one false target object can be obtained. If the false target object is obtained and a detection result of target detection performed in the transmission cycle includes the false target object, the false target object can be excluded from the detection result, to remove impact of a false alarm.

Therefore, the radar provided in this embodiment of this application can simultaneously perform target object detection and interference sensing during the detection time of one detection frame. In addition, interference sensing is performed in the detection time of the detection frame, and the sensed interference signal is usually a signal that actually interferes with the target detection of the radar (as described above, the radar usually transmits the detection signal in a form of a detection frame, and if a signal transmitted by another radar is sensed during the detection time of the detection frame, there is a high probability that the another radar will still transmit a signal in a next detection frame, which may continue to interfere with this radar, and continue to interfere with this radar). This improves comprehensiveness of interference sensing. The sensing result is complete, or the signal that actually interferes with target detection may be sensed even if interference sensing is performed only in idle time of the detection frame. The target detection capability is not lost if the entire detection frame is used for silent sensing.

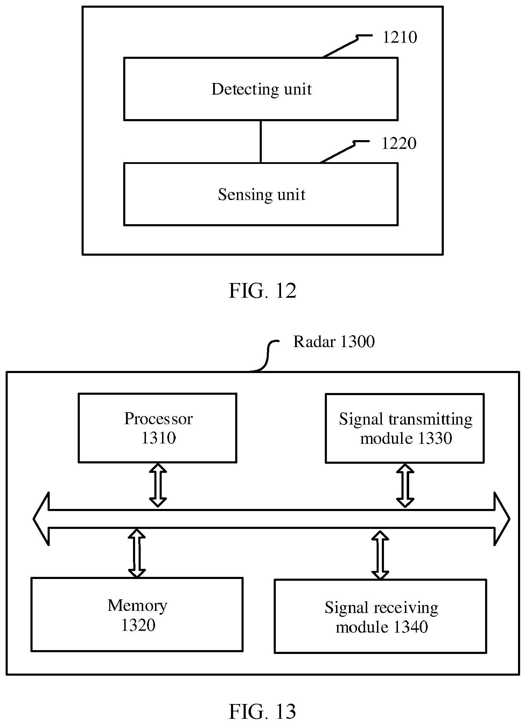

Refer to FIG. 12. An embodiment of this application provides an interference sensing apparatus. An operating period of the apparatus includes at least one detection-only period and at least one detection-and-sensing period. The detection-only period includes a plurality of transmission cycles, and the detection-and-sensing period includes at least one transmission cycle and at least one sensing cycle.

As shown in FIG. 12, the apparatus includes the following units.

A detecting unit 1210 is configured to: when the apparatus is in the transmission cycle, generate and transmit a first detection signal, and receive an echo signal corresponding to the first detection signal, to perform target object detection.

A sensing unit 1220 is configured to: when the apparatus is in the sensing cycle, generate but not transmit a second detection signal, and obtain an electromagnetic signal that can be detected by the apparatus in the sensing cycle, to perform interference sensing.

For functions of functional units of the interference sensing apparatus provided in this embodiment of this application, refer to the foregoing implementation of embodiments shown in FIG. 4 to FIG. 11. Details are not described herein again.

According to the apparatus provided in this embodiment of this application, target object detection and interference sensing may be simultaneously implemented in detection time of a same detection frame. In addition, interference sensing is performed in the detection time of the detection frame, and the sensed interference signal is usually the signal that actually interferes with target detection of the radar. Therefore, this improves comprehensiveness of interference sensing. The sensing result is complete, or the signal that actually interferes with target detection may be sensed even if interference sensing is performed only in idle time of the detection frame. The target detection capability is not lost if the entire detection frame is used for silent sensing.

Refer to FIG. 13. An embodiment of this application provides a radar 1300, including a processor 1310, a memory 1320, a signal transmitting module 1330, and a signal receiving module 1340. The memory 1320 is configured to store a computer program. When the computer program stored by the memory 1320 is executed by the processor 1310, the radar 1300 may implement functions of radars in the embodiments shown in FIG. 4 to FIG. 11.

The method steps in embodiments of this application may be implemented by hardware, or may be implemented by the processor executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are only used for differentiation for ease of description, and are not used to limit the scope of embodiments of this application.

**Claims**

1. An interference sensing method, applied to a radar, wherein an operating period of the radar comprises at least one detection-only period and at least one detection-and-sensing period, the detection-only period comprises a plurality of transmission cycles, and the detection-and-sensing period comprises at least one transmission cycle and at least one sensing cycle; and
the method comprises:

   when the radar is in the transmission cycle, generating and transmitting, by the radar, a first detection signal, and receiving an echo signal corresponding to the first detection signal, to perform target object detection; or
   when the radar is in the sensing cycle, generating but skipping transmitting, by the radar, a second detection signal, and obtaining an electromagnetic signal that can be detected by the radar in the sensing cycle, to perform interference sensing.

2. The method according to claim 1, wherein the radar comprises a first antenna and a second antenna, the first detection signal corresponds to the first antenna, and the second detection signal corresponds to the second antenna;

   the generating and transmitting, by the radar, a first detection signal when the radar is in the transmission cycle comprises: when the radar is in the at least one transmission cycle, generating, by the radar, the first detection signal and transmitting, by the radar, the first detection signal through the first antenna; and
   the generating but skipping transmitting, by the radar, a second detection signal when the radar is in the sensing cycle comprises: when the radar is in the at least one sensing cycle, generating, by the radar, the second detection signal but skipping transmitting, by the radar, the second detection signal through the second antenna.

3. The method according to claim 1, wherein the radar comprises a first antenna and a second antenna, the at least one transmission cycle comprises a transmission cycle corresponding to the first antenna and a transmission cycle corresponding to the second antenna, and the at least one sensing cycle comprises a sensing cycle corresponding to the first antenna and a sensing cycle corresponding to the second antenna;

the generating and transmitting, by the radar, a first detection signal when the radar is in the transmission cycle comprises:

when the radar is in the transmission cycle corresponding to the first antenna, generating, by the radar, a first detection signal corresponding to the first antenna and transmitting, by the radar, the first detection signal corresponding to the first antenna through the first antenna; or when the radar is in the transmission cycle corresponding to the second antenna, generating, by the radar, a first detection signal corresponding to the second antenna and transmitting, by the radar, the first detection signal corresponding to the second antenna through the second antenna; and

the generating but skipping transmitting, by the radar, a second detection signal when the radar is in the sensing cycle comprises: when the radar is in the sensing cycle corresponding to the first antenna, generating, by the radar, a second detection signal corresponding to the first antenna but skipping transmitting, by the radar, the second detection signal corresponding to the first antenna through the first antenna; or when the radar is in the sensing cycle corresponding to the second antenna, generating, by the radar, a second detection signal corresponding to the second antenna but skipping transmitting, by the radar, the second detection signal corresponding to the second antenna through the second antenna.

4. The method according to any one of claims 1 to 3, wherein a transmission cycle of the at least one transmission cycle and a sensing cycle of the at least one sensing cycle are arranged in an alternating manner; or

a transmission cycle of the at least one transmission cycle and a sensing cycle of the at least one sensing cycle are randomly arranged; or

there are N sensing cycles between two adjacent transmission cycles of the at least one transmission cycle, wherein the N sensing cycles are a subset of the at least one sensing cycle, and N is an integer greater than 1; or

there are M transmission cycles between two adjacent sensing cycles of the at least one sensing cycle, wherein the M transmission cycles are a subset of the at least one transmission cycle, and M is an integer greater than 1.

5. The method according to any one of claims 1 to 3, wherein the method further comprises: determining interference information of the radar based on the second detection signal and the electromagnetic signal.

6. The method according to claim 5, wherein the electromagnetic signal comprises a plurality of signals; and the determining interference information of the radar based on the second detection signal and the electromagnetic signal comprises:

performing frequency mixing on different signals in the plurality of signals separately with the second detection signal, to obtain a plurality of intermediate frequency signals;

determining that signal strength of a first signal in the plurality of intermediate frequency signals is greater than a preset threshold;

determining, in the plurality of signals, that a signal corresponding to the first signal is an interference signal; and

determining that frequency domain information and/or time domain information of the interference signal are/is the interference information.

7. The method according to any one of claims 1 to 3, wherein the transmission cycle means a cycle in which the radar transmits a radar signal with a full waveform.

8. An interference sensing apparatus, wherein an operating period of the apparatus comprises at least one detection-only period and at least one detection-and-sensing period, the detection-only period comprises a plurality of transmission cycles, and the detection-and-sensing period comprises at least one transmission cycle and at least one sensing cycle; and

the apparatus comprises:

a detecting unit, configured to: when the apparatus is in the transmission cycle, generate and transmit a first detection signal, and receive an echo signal corresponding to the first detection signal, to perform target object detection; and

a sensing unit, configured to: when the apparatus is in the sensing cycle, generate but not transmit a second detection signal, and obtain an electromagnetic signal that can be detected by the apparatus in the sensing cycle, to perform interference sensing.

9. The apparatus according to claim 8, wherein the apparatus further comprises a first antenna and a second antenna, the first detection signal corresponds to the first antenna, and the second detection signal corresponds to the second antenna;

the detecting unit is configured to: when the apparatus is in the at least one transmission cycle, generate the first detection signal and transmit the first detection signal through the first antenna; and
the sensing unit is configured to: when the apparatus is in the at least one sensing cycle, generate the second detection signal but not transmit the second detection signal through the second antenna.

10. The apparatus according to claim 8, wherein the apparatus further comprises a first antenna and a second antenna, the at least one transmission cycle comprises a transmission cycle corresponding to the first antenna and a transmission cycle corresponding to the second antenna, and the at least one sensing cycle comprises a sensing cycle corresponding to the first antenna and a sensing cycle corresponding to the second antenna;

the detecting unit is configured to: when the apparatus is in the transmission cycle corresponding to the first antenna, generate a first detection signal corresponding to the first antenna and transmit the first detection signal corresponding to the first antenna through the first antenna; or when the apparatus is in the transmission cycle corresponding to the second antenna, generate a first detection signal corresponding to the second antenna and transmit the first detection signal corresponding to the second antenna through the second antenna; and
the sensing unit is configured to: when the apparatus is in the sensing cycle corresponding to the first antenna, generate a second detection signal corresponding to the first antenna but not transmit the second detection signal corresponding to the first antenna through the first antenna; or when the apparatus is in the sensing cycle corresponding to the second antenna, generate a second detection signal corresponding to the second antenna but not transmit the second detection signal corresponding to the second antenna through the second antenna.

11. The apparatus according to any one of claims 8 to 10, wherein a transmission cycle of the at least one transmission cycle and a sensing cycle of the at least one sensing cycle are arranged in an alternating manner; or

a transmission cycle of the at least one transmission cycle and a sensing cycle of the at least one sensing cycle are randomly arranged; or
there are N sensing cycles between two adjacent transmission cycles of the at least one transmission cycle, wherein the N sensing cycles are a subset of the at least one sensing cycle, and N is an integer greater than 1; or
there are M transmission cycles between two adjacent sensing cycles of the at least one sensing cycle, wherein the M transmission cycles are a subset of the at least one transmission cycle, and M is an integer greater than 1.

12. The apparatus according to any one of claims 8 to 10, wherein the apparatus further comprises:
a determining unit, configured to determine interference information of the apparatus based on the second detection signal and the electromagnetic signal.

13. The apparatus according to claim 12, wherein the electromagnetic signal comprises a plurality of signals; and the determining unit is configured to:

perform frequency mixing on different signals in the plurality of signals separately with the second detection signal, to obtain a plurality of intermediate frequency signals;
determine that signal strength of a first signal in the plurality of intermediate frequency signals is greater than a preset threshold;
determine, in the plurality of signals, that a signal corresponding to the first signal is an interference signal; and
determine that frequency domain information and/or time domain information of the interference signal are/is the interference information.

14. The apparatus according to any one of claims 8 to 10, wherein the transmission cycle means a cycle in which the apparatus transmits a radar signal with a full waveform.

**15.** A radar, comprising a processor, a memory, a signal transmitting module, and a signal receiving module, wherein the memory is configured to store a computer program, and the processor is configured to execute the computer program to implement the method according to any one of claims 1 to 7.

**16.** A computer storage medium, wherein the computer storage medium stores a computer program, and when the computer program is executed by a processor, the method according to any one of claims 1 to 7 is implemented.

Detection signal transmitted
by a radar A1

Lane    | Radar A1 |  →  | Object B1 |

Echo signal reflected by an
object B1

*Transmitted signal
of a radar A2*

Lane    | Radar A2 |

FIG. 1

Detection time

Idle time

Operating time

Detection
frame

Detection
frame

Detection
frame

Detection
frame

...                                                                ...

FIG. 2A

FIG. 2B

FIG. 3

FIG. 4

FIG. 5

FIG. 6

EP 4 276 490 A1

A transmit antenna C1 is enabled, to perform target detection

A transmit antenna C2 is disabled, to perform interference sensing

A transmit antenna C2 is enabled, to perform interference sensing

Detection time

Idle time

Detection and sensing time

Operating time

Detection-only period

Detection-and-sensing period

Detection-only period

Detection-and-sensing period

Frequency

$T_c^{'}$

$B$

$b_0$

$T_c$

Time

Frequency

$T_c$

$B$

$b_0$

$T_c$

Time

FIG. 7

| | A transmit antenna C1 is enabled, to perform target detection | | Detection time |
|---|---|---|---|
| | A transmit antenna C2 is disabled, to perform interference sensing | | Idle time |
| | A transmit antenna C2 is enabled, to perform interference sensing | | Detection and sensing time |

Operating time

Detection-only period    Detection-and-sensing period    Detection-only period    Detection-and-sensing period

Frequency

$T_c^{'}$

$B'$ $B$ $b_0$

$T_c$

Time

Frequency

$T_c$

$B$ $b_0$

$T_c$

Time

FIG. 8

EP 4 276 490 A1

———————— A transmit antenna C1 is enabled, to perform target detection

▨▨▨▨ Detection time

– – – – A transmit antenna C1 is disabled, to perform interference sensing

▤▤▤▤ Idle time

▟▔▔▔▔▔▟ A transmit antenna C2 is disabled, to perform interference sensing

═══════ Detection and sensing time

▭▭▭▭ A transmit antenna C2 is enabled, to perform interference sensing

Operating time

Detection-only period

Detection-and-sensing period

Detection-only period

Detection-and-sensing period

Frequency

$T'_{c2}$  $T'_{c1}$

$B$

$b_0$

$T_{c1}$  $T_{c2}$

Time

Frequency

$B$

$b_0$

Time

FIG. 9

FIG. 10

FIG. 11

1210

Detecting unit

1220

Sensing unit

FIG. 12

Radar 1300

Processor
1310

Signal transmitting
module 1330

Memory
1320

Signal receiving
module 1340

FIG. 13

## INTERNATIONAL SEARCH REPORT

| International application No. |
|---|
| **PCT/CN2021/122892** |

| A. | CLASSIFICATION OF SUBJECT MATTER |
|---|---|

G01S 7/36(2006.01)i

According to International Patent Classification (IPC) or to both national classification and IPC

| B. | FIELDS SEARCHED |
|---|---|

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS; CNTXT; CNKI; 万方; 超星; VEN; USTXT; EPTXT; WOTXT; IEEE: 华为, 雷达, 干扰, 侦听, 探测帧, 空闲, 关闭, 不发送, 不发射, 不发出, 停发, 停止, 发送, 发射, 发出, interference, transmit operation, transmission, transmitter, transmitting means, turned off, turned-off, suspend+, is not conducted, does not transmit, do not transmit

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110907899 A (INFINEON TECHNOLOGIES AG.) 24 March 2020 (2020-03-24) description paragraphs [0021]-[0047], figures 1A-5B | 1-16 |
| A | CN 111521975 A (HUAWEI TECHNOLOGIES CO., LTD.) 11 August 2020 (2020-08-11) entire document | 1-16 |
| A | CN 102662161 A (BEIJING INSTITUTE OF TECHNOLOGY et al.) 12 September 2012 (2012-09-12) entire document | 1-16 |
| A | CN 103983953 A (WUHAN TURBO ELECTRONIC SYSTEM CO., LTD.) 13 August 2014 (2014-08-13) entire document | 1-16 |
| A | US 2004095269 A1 (MITSUBISHI ELECTRIC CORP.) 20 May 2004 (2004-05-20) entire document | 1-16 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2021** | **08 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/122892**

| Patent document cited in search report | | | Publication date (day/month/year) | Patent family member(s) | | | Publication date (day/month/year) |
|---|---|---|---|---|---|---|---|
| CN | 110907899 | A | 24 March 2020 | DE | 102019124851 | A1 | 19 March 2020 |
| | | | | US | 2020088838 | A1 | 19 March 2020 |
| CN | 111521975 | A | 11 August 2020 | WO | 2020156133 | A1 | 06 August 2020 |
| CN | 102662161 | A | 12 September 2012 | CN | 102662161 | B | 26 March 2014 |
| CN | 103983953 | A | 13 August 2014 | CN | 103983953 | B | 30 November 2016 |
| US | 2004095269 | A1 | 20 May 2004 | JP | 2004163340 | A | 10 June 2004 |
| | | | | JP | 4007498 | B2 | 14 November 2007 |
| | | | | US | 6894641 | B2 | 17 May 2005 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110149985